# EUROPEAN PATENT APPLICATION

(11) **EP 2 256 659 A1**
(43) Date of publication of application: **01.12.2010**
(21) Application number: 09161239.0
(22) Date of filing: 27.05.2009
(51) Int. Cl.: G06F 21/00

(54) **Method and apparatus for preventing modification of a program execution flow**

(71) Applicant: NTT DoCoMo, Inc., Tokyo (JP)
(72) Inventor: Philippaerts, Pieter, B-3000, Leuven (BE); Younan, Yves, B-3001, Heverlee (BE); Piessens, Frank, B-3001, Heverlee (BE); Lachmund, Sven, D-80687, München (DE); Walter, Thomas, D-80935, München (DE)
(74) Representative: Betten & Resch

(57) **Abstract**

A method of preventing an attacker from modifying the execution flow of a computer program, said computer program comprising a sequence of operations which are sequentially executed, said method comprising:
identifying one or more ranges of the memory of said computer where operations of said program execution flow which was not modified by an attacker can be expected to be located;
determining a mask for masking a memory address such as to ensure that the address lies within said one or more identified memory ranges;
examining said execution flow of said program to identify one or more operations of said program which cause the execution flow of said program to jump to a target memory address where the next operation of said program execution flow is located, said target address being different from the memory address adjacent to present memory address of the identified operation;
inserting an operation into said program execution flow before the execution of said identified one or more operations, said inserted operation masking said target address by applying said determined mask to said target address to thereby ensure that said operation which causes said jump is directed to a memory location which lies in said one or more identified memory ranges.

## Description

### FIELD OF INVENTION

The present invention relates to a method and an apparatus for preventing the modification of a program execution flow by an attacker, such as e.g. a buffer overflow attack.

### BACKGROUND OF THE INVENTION

Buffer overflow attackers often rely on being able to change the return address (e.g. the return address from a function call or a method call) and, thus, allow control flow continue by executing their injected malicious code. This allows them to execute arbitrary code, which turns buffer overflow vulnerabilities to serious threats.

In order to prevent buffer overflow attacks or reduce them significantly, effective countermeasures are required. In the past, countermeasures have been added to main stream operating systems already, but over time, attackers found ways to bypass them. New effective countermeasures are to be deployed, therefore.

Up trill now, various countermeasures are known. Countermeasures are generally categorised in one of two classes. The first class of countermeasures makes it impossible for an attacker to change the return address. An example of this class of countermeasures is given in Yves Younan, Davide Pozza, Frank Piessens and Wouter Joosen. Extended protection against stack smashing attacks without performance loss. Proceedings of the 22nd Annual Computer Security Applications Conference (ACSAC'06), Miami Beach, Florida, U.S.A, December 2006. IEEE Press. In the other class, the countermeasures allow an attacker to modify the return address, but try to detect these changes before any harm can happen. Examples of such countermeasures are stack cookies (see e.g. Jason Combs: Windows Stack Buffer Overflow Protection. http://www.ddj.com/security/184405546), pointer encryption (see e.g. Crispin Cowan, Steve Beattie, John Johansen, and Perry Wagle. Point-Guard: protecting pointers from buffer overflow vulnerabilities. In Proceedings of the 12th USENIX Security Symposium, pages 91-104, Washington, D.C., U.S.A., August 2003. USENIX Association) and control flow integrity CFI (see e.g. Martin Abadi, Mihai Budiu, Ulfar Erlingsson, and Jay Ligatti. Control-flow integrity. In Proceedings of the 12th ACM Conference on Computer and Communications Security, pages 340-353, Alexandria, Virginia, U.S.A., November 2005).

Control flow Integrity CFI essentially builds a graph of the program execution flow and identifies any jumps in the flow and where they jump to. These locations are then assigned a unique ID which is inserted into the code. Then, during execution, once a jump occurs it is checked whether the location to which it jumps has the correct ID which was determined beforehand when examining the program flow. If this is not the case, then the program will be aborted. In this manner CFI detects if a return address of the program flow has been modified (which would result in a wrong label of the destination), and based thereupon the program would then be aborted.

This approach is rather effective, however, it comes along with a rather large overhead, since at each jump there has to be at first investigated whether the jump indeed goes to a location which is the correct one for this jump, in other words whether it has assigned the right ID. Such operations considerably slow down the program execution, and therefore it is an objective of the invention to provide another approach which is secure but leads to less overhead than CFI.

### SUMMARY OF THE INVENTION

According to one embodiment there is provided a method of preventing an attacker from modifying the execution flow of a computer program, said computer program comprising a sequence of operations which are sequentially executed, said method comprising:
identifying one or more ranges of the memory of said computer where operations of said program execution flow which was not modified by an attacker can be expected to be located;
determining a mask for masking a memory address such as to ensure that the address lies within said one or more identified memory ranges;
examining said execution flow of said program to identify one or more operations of said program which cause the execution flow of said program to jump to a target memory address where the next operation of said program execution flow is located, said target address being different from the memory address adjacent to present memory address of the identified operation;
inserting an operation into said program execution flow before the execution of said identified one or more operations, said inserted operation masking said target address by applying said determined mask to said target address to thereby ensure that said operation which causes said jump is directed to a memory location which lies in said one or more identified memory ranges.

By determining a memory range where unmodified code can be expected, determining a corresponding mask and applying it before a jump, the possibilities of making practical use of any modification of the program execution flow by an attacker can be severely limited.

According to one embodiment the target address is different from the memory address adjacent to present memory address of the identified operation. In other words, a "jump" means that the program execution flow indeed "jumps" to a memory address which is not just the next memory address of the program code memory but some more remote memory location.

According to one embodiment said one or more identified memory ranges comprise one or more of the following;
the memory range where the program code of said computer program is located;
the memory range where one or more libraries which have been loaded to be used by said computer program are located.

The memory where the program code is located is a memory range which can be considered as safe against any buffer overflow attacks, and therefore this range can be used to generate a meaningful mask.

Similarly the memory range where loaded libraries are located may be regarded as a relatively safe area, and therefore also for this memory range a mask can be generated and applied.

According to one embodiment said one or more operations which cause the execution flow of said program to jump to a target address comprise one or more of the following:
a function or a method call;
a return from a function or a method call;
a calculated jump;
a jump to a library function.

These are examples where the program execution flow deviates from proceeding with the instruction located at the next memory address, and therefore these are instructions which are potentially vulnerable and for which the protection by a masking operation may be useful.

According to one embodiment the method comprises:
marking the memory region into which a library has been loaded as read-only; and/or
marking the global offset table and/or the procedure linkage table as read-only.

Marking the region where a library is located as read-only protects the change of the code where the libraries are located;
marking the global offset table or the procedure linkage table as read-only protects against any attacks which rely on a modification of the contents of these tables.

According to one embodiment the method comprises:
inserting the operation which applies said mask before any computed jump; or
inserting the operation which applies said mask before any library call;
applying said mask to the global offset table before accessing said global offset table;
applying said mask to the procedure linkage table before accessing said procedure linkage table.

These are examples where the insertion of a masking operation can be useful to prevent any attacks.

According to one embodiment the method comprises:
if the last memory address of the memory range where unmodified program code can be expected to be located does not consist of a series of continuous logical '1's, filling said memory range with dummy instructions or NOP instructions or non-existing instructions until the last memory address of said memory range consists of a series of logical '1's.

In this way a good mask can be generated even if the last memory address of the program code does contain also logical '0's.

According to one embodiment the method comprises:
examining the program flow of said program code to determine for a function which is called during said program flow those memory address locations from which said function is called;
determining a mask which allows the return of the program execution flow from said called function to those addresses from which said function has been called or which are next to them, and
applying said mask at said inserted instruction always before a return from said called function is performed.

The determination and application of a mask based on the calling addresses allows for a more fine grained mask, thereby enhancing security by ensuring that a return jumps only to a function or an address from which actually the call originated.

The jump back may - depending on the actual implementation or the compiler - be allowed to location of either the "next operation" after the one which caused the jump, or it may be allowed directly to the location of the instruction which caused the jump.

According to one embodiment said mask is determined based on ORing the memory addresses of the operations next to the ones of the operations from which said function was called.

The logical ORing is a practical approach of determining a mask based on multiple calling addresses.

According to one embodiment for each function which is called during said program execution flow there is determined a mask which is specific for said function, said function specific mask always being applied when a return from said called function is to be performed.

This ensures the application of a function specific mask which further enhances security.

According to one embodiment the method comprises:
aligning the operations of said program execution flow such that method calls or computed jumps are aligned such that they are located at memory addresses which are separated by a certain interval or multiples thereof; and
determining said mask such that after the application of said mask the resulting memory address is at one of said addresses where instructions which are not method calls or computed jumps are located.

This ensures that an attacker cannot bypass a masking instruction by jumping directly onto a jumping instruction.

According to one embodiment the method comprises:
aligning the operations of said program execution flow such that method calls or computed jumps are located on uneven memory addresses, and
determining said mask such that after the application of said mask the resulting memory address is an even address so that a jump or a return from a method call results at an address before a next jump or method call; or
aligning the operations of said program execution flow such that method calls or computed jumps are located on even memory addresses, and determining said mask such that after the application of said mask the resulting memory address is an uneven address so that a jump or a return from a method call results at an address before a next jump or method call.

This is a specific implementation of an alignment of jumping instructions.

According to one embodiment the method comprises:
setting by said inserted instruction operation a conditionally executable parameter which is checked before an operation is executed;
performing a setting for the jump operation following said masking operation and for the operation which follows the execution of the jump such that they are only executed if the conditionally executable parameter is set.

In this way security can be further enhanced by making use of a conditionally executable parameter.

According to one embodiment there is provided:
An apparatus for preventing an attacker from modifying the execution flow of a computer program, said computer program comprising a sequence of operations which are sequentially executed, said apparatus comprising:
   a module for identifying one or more ranges of the memory of said computer where operations of said program execution flow which was not modified by an attacker can be expected to be located;
   a module for determining a mask for masking a memory address such as to ensure that the address lies within said one or more identified memory ranges;
   a module for examining said execution flow of said program to identify one or more operations of said program which cause the execution flow of said program to jump to a target memory address where the next operation of said program execution flow is located, said target address being different from the memory address adjacent to present memory address of the identified operation;
   a module for inserting an operation into said program execution flow before the execution of said identified one or more operations, said inserted operation masking said target address by applying said determined mask to said target address to thereby ensure that said operation which causes said jump is directed to a memory location which lies in said one or more identified memory ranges.

According to one embodiment the apparatus comprises:
a module for performing a method according to one of the embodiments of the invention.

According to one embodiment there is provided:
a computer program comprising computer program code which when being executed on a computer enables said computer to carry out a method according to one of the embodiments of the invention.

### DESCRIPTION OF THE DRAWINGS

Fig. 1 schematically illustrates an embodiment of the present invention.
Fig. 2 schematically illustrates a memory architecture in which an embodiment of the invention may be applied.

### DETAILED DESCRIPTION

The present invention will now be explained by means of several embodiments. First of all, however, some terms used in the description will be explained.
AND: Logical AND operation
BIC: Logical bit clear (AND NOT)
Attacker: A malicious user exploring a vulnerability in a software.
Control flow integrity: A countermeasure to identify deviation from the intended control flow or program code in an application.
Global Offset Table: The global offset table converts position-independent address calculations to absolute locations.
Heap: Computer memory used for dynamic memory allocation.
Mask: A value that is being used in bitwise operations and which combined with another value returns a value within a specific value range.
OR: Logical OR Operation
Program code: Instructions of the application to be executed.
Procedure Linkage Table: The procedure linkage table converts position-independent function calls to absolute locations.
Shell code: program code that is injected into memory by an attacker, e.g. into the heap or the stack.
Stack: Computer memory with a fixed origin and variable size. The stack operates last in first out.
Stack cookie: A token of unpredictable value.

According to one embodiment of the invention a mask (the generation and application of which will be explained in more detail below) allows restricting execution of a program after returning from a function call or when executing a function call to a window of instructions only which correspond to a certain range or ranges in memory.

The approach according to an embodiment of the invention which will hereinafter sometimes be labelled as CRAM (call and return address masking) masks a return address to point to a memory range where legitimate code the program execution flow of which was not modified by an attacker can be expected to be located. Such a memory range is according to one embodiment for example the memory range where the program code is located. By masking a target address of any function call or return from a function, injected code in any overflown buffer in the data memory cannot be executed.

The presented approach is a countermeasure with low runtime overhead, compatible with other countermeasures, while it still provides high assurance with respect to security.

According to the embodiments of the present invention there is introduced a new category of how to prevent an attack which could modify the program execution flow. Previous approaches either prevent a modification of the jump address, or they detect a modification of a jump address. With the proposed approach according to embodiments of the invention there is suggested a third category of countermeasures. Instead of preventing overwriting the return address or detecting changes to it, the suggested approach limits the possibility for an attacker to do something useful with any modification.

According to one embodiment there is identified one or more memory ranges where one may expect that legitimate program code which has not been modified is located. This memory range can for example be the range where the program code is located, or the range where loaded libraries which may be used during the execution of the program are located. The corresponding memory locations may e.g. be determined by the compiler.

Once such one or more memory locations are identified, there is then generated a mask which - when being applied to a memory address - results in a memory address which lies within the one or more identified ranges. Then there is inserted an operation into the program execution flow which applies the mask to a target address of a jump operation before a jump operation. In other words, the program execution flow is examined for any jumps where the execution flow does not just proceed to the instruction which is located at the next address next to the one where the present instruction is located, but where instead the program flow jumps to a different address. Such instructions may be function or method calls or a return from a function or method call.

When such an operation which causes a jump to a target address different from the one next to the location of the present operation is identified, then according to one embodiment there is inserted a masking operation before the identified jump operation into the program execution flow. The masking operation applies the mask which has been determined based on where legitimate instructions or operations can be expected to be located to the target address of the jump operation, thereby ensuring that the jump leads to an address where only legitimate code which has not been modified by an attacker can be expected to be located.

Therefore, according to one embodiment the legitimate and unmodified program code is protected against modifications by an attacker through inserting modifications into the program execution flow which apply a mask to the target address of a jump in the program execution flow. Jumps are identified in the program execution flow, and the program execution flow is then modified by inserting the operation which applies the mask to the target address of the identified jump.

The identification of one or more "safe memory ranges", the determination of a corresponding mask, the identification of a jump in the program flow, and the insertion of a masking operation which masks the target address of a jump can be executed by a compiler. The program which has been compiled by such a compiler contains a masking operation before each jump operation, and therefore the jumps of the program execution flow are only directed to "safe memory ranges" where one may expect that only legitimate program code which has not been modified by an attacker is located.

Such an approach is highly efficient and leads to very low overhead.

Now a more concrete example of an embodiment will be described.

To achieve the masking of for example a jump which corresponds to a return from a function call, one may add some code at the end of each function. Typically, a function ends as follows (abstracted assembler code):

### [get return address from stack]

### [jump to this address]

If one can make sure that the attacker can only jump to code memory (i.e. a memory range where the - unmodified - program code is located), then an attacker will not be able to jump to his shell code which he inserted and which is typically placed on the heap or on the stack.

In order to achieve this behaviour, according to one embodiment one may apply a special mask, for example by a bitwise operation (e.g. AND, OR or BIC (logical bit clear - AND NOT)) on the return address, which enforces the special mask. This mask makes sure that the resulting address does not exceed the bounds of the code memory. Instead of jumping to the return address (= the target address of the jump), then the return jumps to the address which results from applying the special mask to the return address.

For that purpose, the above code sequence is changed as follows:
[get return address from stack]
**[apply mask on address, thus making sure that the return address points to code memory]**
[jump to this address]

As can be seen, the original code is modified by inserting the operation which applies the special mask before the jump operation.

Thereby, even though an application may still have buffer overflow vulnerabilities, it becomes much harder for the attacker to exploit them in a way that might be useful for the attacker.

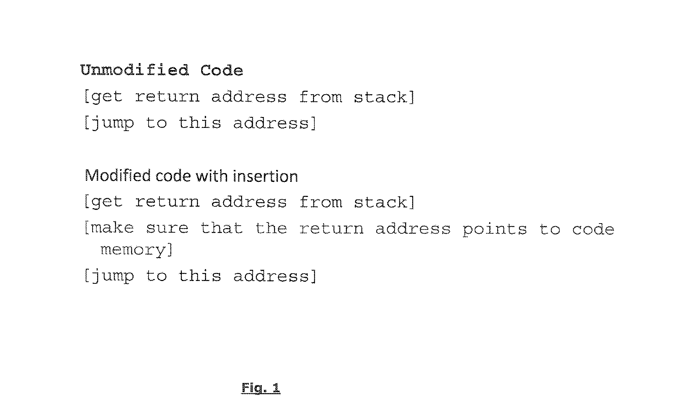

A compilation of the (original) code before modification and the modified code after modification for security purposes is illustrated in Fig. 1.

Such an approach has low overhead and thus offers better performance than other countermeasures while still significantly improving security.

According to one embodiment therefore buffer overflows are not prevented, but it is limited what an attacker can do with an overflow. The attacker tries to manipulate the control flow of an application by overwriting important data such as a return address. In this case, it is assumed that the attacker can manipulate the return address to make it point to anywhere in memory. The proposed approach hinders this ability by applying a mask to the return address before returning to it. The mask ensures that the return address points to somewhere in code memory, making it impossible for an attacker to return to injected code.

The same approach may not only be applied to jumps where the program flow returns from a function call or method call to a return address as a target address, but it may also be applied to where the program execution flow follows any other jump, such as a jump top a library call. In this case the mask which is applied could be based on the memory range where the loaded libraries are located. Both approaches may also be combined in the sense that there is generated a combined mask which is based on more than one memory ranges, for example the memory range where the program code is located and the memory range where the libraries are located. Both ranges may result in a mask which allows a jump to the memory range of the libraries as well as to the memory range of the program code.

In the following there will be given an example which illustrates an embodiment for the Linux operating system. It should be noted, however, that on other operating systems, the countermeasure may need different masking operations than used here, but the concept remains the same on any system.

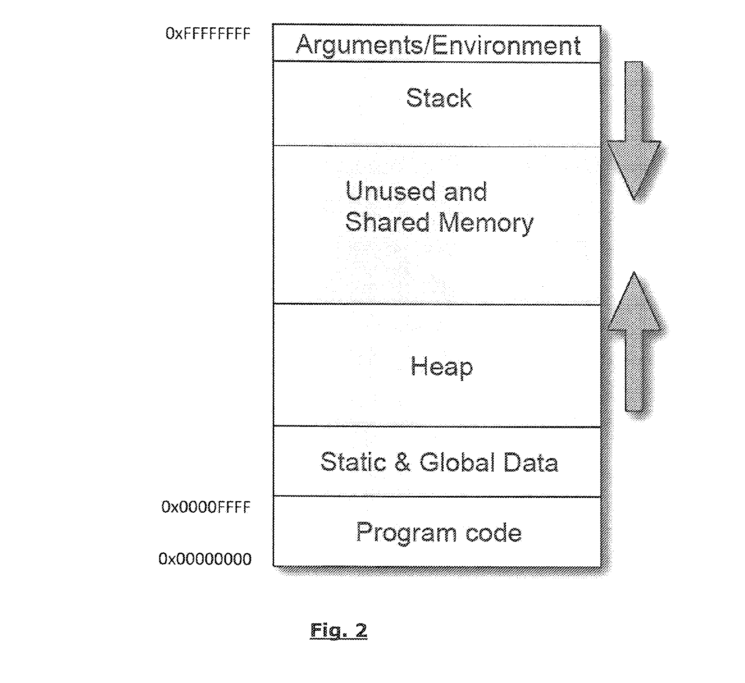

As being shown in Fig. 2, program data, heap and stack are located above the program code in memory. For illustrative purposes, the program code is assumed to range from 0x00000000 to 0x0000FFFF and stack and heap are located on memory address larger than 0x0000FFFF.

If an attacker is able to inject shell code into the heap or stack (e.g., by overflowing a buffer), the addresses of the injected shell code have always at least one bit of the two most significant bytes set to 1. Now, if one masks the return addresses with the mask 0x0000FFFF, then this or these bits are being cleared. The result is that execution continues somewhere in the program code (the range goes from 0x00000000 to 0x0000FFFF). There it most probably will raise an exception because the target address will not make much sense in case of such a - modified - program flow. This may cause the execution of the program to terminate. However, the execution of the injected code can be prevented in this manner.

To apply the suggested modification which enforces the application of a mask, in a first step, the epilog of a method is changed from fetching the return address and jumping to it, to fetching the return address, performing, for instance, an AND operation (or any bitwise operation) with the mask and the return address, and then jumping to the result. Since the heap and the stack are located at higher addresses in memory, a return address that points to a location in the stack or the heap will always have one or more bits set that will never be set for addresses within the code segment. Hence, with the AND operation, it can be enforced that code never jumps outside the code segment. Note, that other bitwise operations might be used on other operating systems or processors. Examples of these other operations are OR, BIC (bit clear), or any other operation that can set or unset a number of bits in the return address.

The above described countermeasure has the advantage that a standard return-to-libc attack is not possible, since libraries are loaded outside of the application code region. The "code region" here is the "safe memory range" or a memory range where one may expect that only legitimate program code which was not modified by an attacker is located. The range may be determined by a compiler, and then the corresponding mask may be determined which enforces a jump to the memory range from 0x00000000 to 0x0000FFFF.

On the other hand, an attacker can jump to an instruction in the application that calls libc. This is, however, a restricted danger as only jumps to libc methods that are used by the application are possible.

In the foregoing example the program code was located in the memory range from 0x00000000 to 0x0000FFFF. In this example the mask can be easily determined since the last memory location of the program code contains only consecutive logical '1's, and thereby also the resulting mask looks the same. However, if the last memory location of the program code contains also logical '0's, it is not so easy to determine a mask which masks exactly the program code area and which does not at the same time exclude some addresses thereof. In such a case, according to one embodiment, the program code memory is filled up with NOP instructions or with dummy instructions or non-existing instructions until the final memory address of the program code consists only of logical '1's, and then the mask can be generated in the same way as described before by masking exactly the memory range where the filled up program code is located.

In the following there will be described another embodiment which further limits the danger from an attack in such situations. In this embodiment, instead of allowing a method to jump to any code in the application, the proposed mechanism allows to only return to methods that call it. For that purpose there is calculated a specific mask per function. This approach requires code or binary analysis, as will be further explained in the following. Consider the following example:

A method or function M1 is located at address 0x0B3E (0000101100111110) and method M2 is located at address 0x0A98 (0000101010011000). And further assume that M3 is only called by M1 and M2 from the addresses mentioned before. Then with the mask 0x0BBE (0000101110111110) one could do much better than with the default mask 0xFFFF (1111111111111111), since the more specific mask 0x0BBE lets the method M3 return to M1 or M2, but not to the entire code region. The mask in this example is based on combining the two addresses 0000101100111110 and 0000101010011000 from which the function M3 is called. The combination in this example is a logical OR, but another bitwise operation could also be applied, as long as the resulting mask allows to return to any of the two locations from which the function M3 has been called.

Therefore, in this embodiment there are - specifically for a method or function which is called - identified the memory locations from which the function is called. Then based on these identified memory locations there is determined a mask which is specific for this function and which allows to return to the identified memory locations from which the function is called.

To be somewhat more precise, since the return from a called method or function to the calling function always jumps to the address next to the address from which the call originated, the mask actually should be based on such an address. In other words, if the calling operation is located at 0000101100111110, then the next address where the next operation in the program flow which follows the calling operation is located should be used to determine the mask. The same of course also holds for any location from which the calling originates. The mask should be determined such that the return is allowed then to the next legitimate instruction in the program flow which is the one which follows the calling instruction.

However, depending on the actual implementation or the compiler which is used, it may also be allowed to jump back directly to the memory location where the instruction which caused the jump is located. More general it may be said that according to one embodiment the jump back from a function or method call is limited to locations which belong to the methods or functions from which the call is originated by generating a mask based on those locations by combining them, preferably through a bitwise operation such as an OR.

It will further be apparent that these function specific masks are determined preferably such that they allow a return to an address range which is smaller than the whole program code range, therefore they are determined based on the individual calling addresses (or the ones which follow them, see before), and then these calling addresses are combined to generate a mask which - when applied - results in a sub-range of the whole program code range and which allows more specifically to return to addresses from which the function was called.

Since the resulting mask is function specific, the insertion of operations which apply the mask of course are also function specific in the sense that when a return from a certain function is identified the masking operation which is inserted before that return operation will apply the mask which is specific for that function.

These function specific masks can be calculated by analyzing a binary file, or they might be calculated during the compilation process. In the latter case, additional logic might be added to the compiler to move methods around in order to generate better masks. This can be achieved by moving different functions which call a certain other function such that they are located at locations having similar memory addresses, since this will then result in a mask which has less logical '1's and more logical '0's, thereby being more restrictive in the allowed memory range for a jump. However, even with the now described embodiment, an attacker may be able to perform an indirect pointer overwrite. This would allow the attacker to, for instance, redirect a system call (e.g. *printf*) to the attacker's own code. Thus, when the system call is executed next time, the attacker's code is being executed instead. To protect against this (and variants) according to one embodiment all computed jumps and library calls are also masked. For library calls, according to one embodiment one may do the masking in the Procedure Linkage Table (PLT), to ensure that entries in the Global Offset Table (GOT) have not been changed.

In this case (where the masking is applied to library calls) the mask may be based on the memory range where the loaded libraries are located, and this mask may then be applied before each jump which would correspond to a library call.

Furthermore, for calculated jumps also a mask may be applied before executing the jump. In the case of calculated jumps the mask may be based on the program code area, and it may further be based on the memory range where the loaded libraries are located.

The addresses in the tables (GOT and PLT) which point to libraries usually do not point to the address range of the program code. Libraries are mapped to addresses higher than the program code. Thus, if jumps are masked to jump to the program code area, libs would never be reachable. The mask therefore may not exclude the range where the libraries are located, since otherwise the program may not execute correctly.

On the other hand, in such a case it still would be preferable if there could be found a mask which narrows the target address down to a memory region which is more narrow than the whole memory range covered by the libc libraries.

However, it may be difficult to find such a mask that is more narrow than the entire library (libc) memory area. This means that there is still a possibility for a severe attack left.

To solve this problem, according to one embodiment one can make the GOT (or the PLT) read-only. This can be done by performing a so-called "memprotect" operation. According to one embodiment the memprotect ooperation is used such that as kind of a "default setting", in other words as the setting during the normal execution of the program, for the GOT (or the PLT) is set to read-only. Once a library is loaded, the GOT or PLT is then set to writable for a short time to enable the setting of the pointers therein, and thereafter it is again set to read-only. The memprotect call can set memory areas from read-only to read-write and vice versa.

This has as disadvantage that every time a library is loaded an expensive memprotect call must be performed, but fortunately this shouldn't happen too frequently during the lifetime of an application. It does have the benefit that in this case, one may drop the extra AND operation in the PLT/GOT code (making every library call a little bit faster).

As a result, when overflowing a buffer, the attacker cannot modify the GOT (or PLT), as it is write-protected, and since the attacker cannot execute injected code, he also cannot execute the memprotect call.

Now there will be explained a further embodiment which deals with the case if the attacker is able to control a specific register. In such a case he might still be able to get around the imposed constraints. Imagine that the countermeasure has changed a call to a library function to:
[copy address of library function to register]
[mask register]
[jump to address in register]

If the attacker can somehow control the contents of that register, he can overwrite the return value to point to the [jump to address in register]. One way of solving this problem is to align method calls and computed jumps on uneven addresses. Since a method normally returns right after the instruction of its parent method that calls the function, this will always be an even address. Consequently, according to one embodiment the least significant bit of the mask can then be selected to always be 0. This will ensure that an attacker can only return to an even address. Since computed jumps are aligned on uneven addresses, the attacker can only jump to either the instruction before the jump (which then will be the masking instruction), or after the jump. In other words, the attacker has no chance of bypassing the masking operation by jumping directly onto a memory location where jump instruction is located.

This method can also be extended for RISC architectures where all instructions are stored at a 4 byte alignment, by ensuring that calls and computed jumps are aligned to a bitmask of 100. The 3 least-significant bits of the countermeasure's mask are then set to 000, preventing a return to instructions aligned at a bitmask of 100. This can be arbitrarily extended depending on the architecture's default alignment.

More generally, the method calls and computed jumps may be aligned at addresses which are separated by a certain interval of multiples thereof. In this way the location of the jump instruction follows a certain pattern in the memory address space which can be used to determine a mask such that when applying the mask to the target address of a jump there will result a target address which excludes the memory locations where the jump instructions are located.

An alternative solution is to reserve a register specifically for library calls. This will make sure that the attacker can never influence the contents of this register. The impact of this solution will differ from processor to processor, since it increases the register pressure.

The approach outlined above already severely hinders an attacker in his attempts to do something useful with an overwritten return address. However, it might still be possible to make the return address point to a location in code memory that calls a system call or library call (depending on the granularity of the mask used in the method with the buffer overflow). One platform specific way to further mitigate this problem, according to one embodiment, is to make use of processor specific features, such as *conditional execution* on the ARM processor. A description of the ARM processor can be found in Andrew Sloss, Dominic Symes, and Chris Wight. ARM System Developer's Guide - Designing and Optimizing System Software, Elsvier, 2004.

This approach uses a specific feature of the ARM processor architecture namely conditional execution. The additional protection is given by the fact that only certain instructions can be executed if the "carry" bit is set; all others are executable if the "carry" bit is unseat.

In this embodiment, all instructions are marked conditionally executable (the "cc" or "cs" as suffix of the instruction name) if the carry is unset (carry clear - cc) or set (carry set - cs). The instruction that does the masking of the return address (operation 03 in the code example below) sets the carry bit (the suffix "s" of the instruction name gets the carry bit set). The branch back to the calling function as well as the instruction after the call to the function (instructions 04 and 08 of the example code) are executed if the carry bit is set ("cs" suffix).

If now the attacker is able to overwrite the return address then the (normal) masking instruction which masks the target address takes care of that one ends up in program code, as explained in connection with the previous embodiments. As an additional side effect the carry bit is set by operation 03. In this way it can be ensured that the program flow proceeds only with instructions which are marked such that the conditionally executable parameter is "carry bit set". This is the case for the instruction which performs the return from the function call (instruction 04 in the code below) and the instruction which follows the return (instruction 08 in the code below).

In this way, even if an attacker could modify the return address, the instruction located at the modified return address still would not be executed because this instruction would not be marked as conditionally executable with the parameter "carry flag set".

The approach will now further be explained by somewhat different words. In a first step, all instructions must be marked to only execute conditionally, for instance when the carry is clear. Then, the instruction that masks the return address is selected and is modified such that it sets the carry flag (instruction 03 in the code example given below). The following jump, that is used to return from the method, is executed conditionally if the carry flag is set, as can be seen from the 'cs' suffix of this instruction. Also the instruction to which the return is directed (instruction 08 in the code below) is conditionally executed if the carry flag is set. Therefore, even if the attacker can influence where the return instruction (instruction 04 in the code below) jumps to, he is limited to an address with an instruction that executes when the carry is set. This excludes almost every instruction of the whole application, including the instructions that call library functions. Therefore this approach further hinders the attacker as he will only be able to jump to instructions where a method call (exuding library method calls!) would normally return to.

Consider the following example:

```
          sum: # Adds parameters a and b, return the result
  
          # This instruction will only execute if the
          # carry flag is clear
       01: addcc r0, r0, r1
  
          # Return; result is in r0
           # set r10 to 0xFFFFFF
        02: movcc r10, #-1
           # Mask the return address (in 'Ir")
          # with 0x0000FFFF; in addition also
          # set the carry again
        03: bicccslr, r10, LSL #16
          # Carry is now set; return to the caller
        04: bxcs Ir
```

```
           parent: <other instructions>
        05: movcc r0, #1
        06: movcc r1, #1
        07: blccsum
          # Clear carry
        08: movcss r10, pc, LSR #1
          # Carry flag is now clear
        09: ldrcc r0, .L0
        10: blccprintf
          <other instructions>
```

In this example, if an attacker would be able to change the return address in the function 'sum', he could only jump to instruction 04 and instruction 08, since these are the only ones which are executable under the condition that the carry flag is set. All other instructions are inaccessible, because they require the carry flag to be clear.

In other words, the masking is further enhanced by changing a "conditionally executable" parameter, here the carry flag, of the program flow. For the instructions of the whole program the setting for these instructions is made such that they are only executed if the "conditionally executable" parameter is not set. However, for those operations which actually perform the jump after the masking, and for the operation which is to be executed after the jump, the setting is made such that they are executed only if the conditionally executable parameter is set. In this way, all other operations except the correct operation following the jump are blocked.

It will be understood by the skilled person that the embodiments described hereinbefore may be implemented by hardware, by software, or by a combination of software and hardware. The modules and functions described in connection with embodiments of the invention may be as a whole or in part implemented by microprocessors or computers which are suitably programmed such as to act in accordance with the methods explained in connection with embodiments of the invention. An apparatus implementing an embodiment of the invention may e.g. comprise a computing device or a mobile phone or any mobile device or mobile station or node which is suitably programmed such that it is able to carry out a method as described in the embodiments of the invention.

According to an embodiment of the invention there is provided a computer program, either stored in a data carrier or in some other way embodied by some physical means such as a recording medium or a transmission link which when being executed on a computer enables the computer to operate in accordance with the embodiments of the invention described hereinbefore.

## Claims

1. A method of preventing an attacker from modifying the execution flow of a computer program, said computer program comprising a sequence of operations which are sequentially executed, said method comprising:
identifying one or more ranges of the memory of said computer where operations of said program execution flow which was not modified by an attacker can be expected to be located;
determining a mask for masking a memory address such as to ensure that the address lies within said one or more identified memory ranges;
examining said execution flow of said program to identify one or more operations of said program which cause the execution flow of said program to jump to a target memory address where the next operation of said program execution flow is located;
inserting an operation into said program execution flow before the execution of said identified one or more operations, said inserted operation masking said target address by applying said determined mask to said target address to thereby ensure that said operation which causes said jump is directed to a memory location which lies in said one or more identified memory ranges.

2. The method of claim 1, wherein
said one or more identified memory ranges comprise one of more of the following; the memory range where the program code of said computer program is located; the memory range where one or more libraries which have been loaded to be used by said computer program are located.

3. The method of claim 1 or 2, wherein said one or more operations which cause the execution flow of said program to jump to a target address comprise one or more of the following:
a function or a method call;
a return from a function or a method call;
a calculated jump;
a jump to a library function.

4. The method of one of the preceding claims, further comprising:
marking the memory region into which a library has been loaded as read-only;
and/or
marking the global offset table and/or the procedure linkage table as read-only.

5. The method of one of the preceding claims, comprising one or more of the following:
inserting the operation which applies said mask before any computed jump; or
inserting the operation which applies said mask before any library call;
applying said mask to the global offset table before accessing said global offset table;
applying said mask to the procedure linkage table before accessing said procedure linkage table.

6. The method of one of the preceding claims, comprising:
if the last memory address of the memory range where unmodified program code can be expected to be located does not consist of a series of continuous logical '1's, filling said memory range with dummy instructions or NOP instructions or non-existing instructions until the last memory address of said memory range consists of a series of logical '1's.

7. The method of one of the preceding claims, comprising:
examining the program flow of said program code to determine for a function which is called during said program flow those memory address locations from which said function is called;
determining a mask which allows the program execution flow to return from said called function to those addresses addresses from which said function has been called or which are next to them, and
applying said mask at said inserted instruction always before a return from said called function is performed.

8. The method of claim 7, wherein said mask is determined based on ORing the memory addresses of the operations next to the ones of the operations from which said function was called.

9. The method of claim 7 or 8, wherein for each function which is called during said program execution flow there is determined a mask which is specific for said function, said function specific mask always being applied when a return from said called function is to be performed.

10. The method of one of the preceding claims, further comprising:
aligning the operations of said program execution flow such that method calls or computed jumps are aligned such that they are located at memory addresses which are separated by a certain interval or multiples thereof; and
determining said mask such that after the application of said mask the resulting memory address is at one of said addresses where instructions which are not method calls or computed jumps are located.

11. The method of claim 10, comprising:
aligning the operations of said program execution flow such that method calls or computed jumps are located on uneven memory addresses, and
determining said mask such that after the application of said mask the resulting memory address is an even address so that a jump or a return from a method call results at an address before a next jump or method call; or
aligning the operations of said program execution flow such that method calls or computed jumps are located on even memory addresses, and
determining said mask such that after the application of said mask the resulting memory address is an uneven address so that a jump or a return from a method call results at an address before a next jump or method call.

12. The method of one of the preceding claims, further comprising:
setting by said inserted instruction operation a conditionally executable parameter which is checked before an operation is executed;
performing a setting for the jump operation following said masking operation and for the operation which follows the execution of the jump such that they are only executed if the conditionally executable parameter is set.

13. An apparatus for preventing an attacker from modifying the execution flow of a computer program, said computer program comprising a sequence of operations which are sequentially executed, said apparatus comprising:
a module for identifying one or more ranges of the memory of said computer where operations of said program execution flow which was not modified by an attacker can be expected to be located;
a module for determining a mask for masking a memory address such as to ensure that the address lies within said one or more identified memory ranges;
a module for examining said execution flow of said program to identify one or more operations of said program which cause the execution flow of said program to jump to a target memory address where the next operation of said program execution flow is located;
a module for inserting an operation into said program execution flow before the execution of said identified one or more operations, said inserted operation masking said target address by applying said determined mask to said target address to thereby ensure that said operation which causes said jump is directed to a memory location which lies in said one or more identified memory ranges.

14. The apparatus of claim 13, further comprising:
a module for performing a method according to one of claims 1 to 12.

15. A computer program comprising computer program code which when being executed on a computer enables said computer to carry out a method according to one of claims 1 to 12.

## Amended claims

### Amended claims in accordance with Rule 137(2) EPC.

**1.** A method of preventing an attacker from modifying the execution flow of a computer program, said computer program comprising a sequence of operations which are sequentially executed, said method comprising:
identifying one or more ranges of the memory of said computer where operations of said program execution flow which was not modified by an attacker can be expected to be located;
determining a mask for masking a memory address such as to ensure that the address lies within said one or more identified memory ranges;
examining said execution flow of said program to identify one or more operations of said program which cause the execution flow of said program to jump to a target memory address where the next operation of said program execution flow is located;
inserting an operation into said program execution flow before the execution of said identified one or more operations, said inserted operation masking said target address by applying said determined mask to said target address to thereby ensure that said operation which causes said jump is directed to a memory location which lies in said one or more identified memory ranges, **characterized in that** said step of identifying one or more ranges of the memory of said computer comprises: examining the program flow of said program code to determine for a function which is called during said program flow those memory address locations from which said function is called, and wherein said method further comprises:
determining a mask which allows the program execution flow to return from said called function to those addresses from which said function has been called or which are next to them, and
applying said mask at said inserted instruction always before a return from said called function is performed.

**2.** The method of claim 1, wherein
said one or more identified memory ranges comprise one or more of the following;
the memory range where the program code of said computer program is located;
the memory range where one or more libraries which have been loaded to be used by said computer program are located.

**3.** The method of claim 1 or 2, wherein said one or more operations which cause the execution flow of said program to jump to a target address comprise one or more of the following:
a function or a method call;
a return from a function or a method call;
a calculated jump;
a jump to a library function.

**4.** The method of one of the preceding claims, further comprising:
marking the memory region into which a library has been loaded as read-only; and/or
marking the global offset table and/or the procedure linkage table as read-only.

**5.** The method of one of the preceding claims, comprising one or more of the following:
inserting the operation which applies said mask before any computed jump; or
inserting the operation which applies said mask before any library call;
applying said mask to the global offset table before accessing said global offset table;
applying said mask to the procedure linkage table before accessing said procedure linkage table.

**6.** The method of one of the preceding claims, comprising:
if the last memory address of the memory range where unmodified program code can be expected to be located does not consist of a series of continuous logical '1's, filling said memory range with dummy instructions or NOP instructions or non-existing instructions until the last memory address of said memory range consists of a series of logical '1's.

**7.** The method of claim 1, wherein said mask is determined based on ORing the memory addresses of the operations next to the ones of the operations from which said function was called.

**8.** The method of claim 1 or 7, wherein for each function which is called during said program execution flow there is determined a mask which is specific for said function, said function specific mask always being applied when a return from said called function is to be performed.

**9.** The method of one of the preceding claims, further comprising:
aligning the operations of said program execution flow such that method calls or computed jumps are aligned such that they are located at memory addresses which are separated by a certain interval or multiples thereof; and
determining said mask such that after the application of said mask the resulting memory address is at one of said addresses where instructions which are not method calls or computed jumps are located.

**10.** The method of claim 9, comprising:
aligning the operations of said program execution flow such that method calls or computed jumps are located on uneven memory addresses, and
determining said mask such that after the application of said mask the resulting memory address is an even address so that a jump or a return from a method call results at an address before a next jump or method call; or
aligning the operations of said program execution flow such that method calls or computed jumps are located on even memory addresses, and
determining said mask such that after the application of said mask the resulting memory address is an uneven address so that a jump or a return from a method call results at an address before a next jump or method call.

**11.** The method of one of the preceding claims, further comprising:
setting by said inserted instruction operation a parameter which is checked before an operation is executed;
performing a setting for the jump operation following said masking operation and for the operation which follows the execution of the jump such that they are only executed if the parameter is set.

**12.** An apparatus for preventing an attacker from modifying the execution flow of a computer program, said computer program comprising a sequence of operations which are sequentially executed, said apparatus comprising:
a module for identifying one or more ranges of the memory of said computer where operations of said program execution flow which was not modified by an attacker can be expected to be located;
a module for determining a mask for masking a memory address such as to ensure that the address lies within said one or more identified memory ranges;
a module for examining said execution flow of said program to identify one or more operations of said program which cause the execution flow of said program to jump to a target memory address where the next operation of said program execution flow is located;
a module for inserting an operation into said program execution flow before the execution of said identified one or more operations, said inserted operation masking said target address by applying said determined mask to said target address to thereby ensure that said operation which causes said jump is directed to a memory location which lies in said one or more identified memory ranges, **characterized in that** said moodule for identifying one or more ranges of the memory of said computer comprises:
a module for examining the program flow of said program code to determine for a function which is called during said program flow those memory address locations from which said function is called, and wherein said apparatus further comprises:
a module for determining a mask which allows the program execution flow to return from said called function to those addresses from which said function has been called or which are next to them, and
a module applying said mask at said inserted instruction always before a return from said called function is performed.

**13.** The apparatus of claim 12, further comprising:
a module for performing a method according to one of claims 2 to 11.

**14.** A computer program comprising computer program code which when being executed on a computer enables said computer to carry out a method according to one of claims 1 to 11.
